# EUROPÄISCHE PATENTSCHRIFT

(11) **EP 0 824 304 B1**
(45) Veröffentlichungstag und Bekanntmachung des Hinweises auf die Patenterteilung: **27.09.2000**
(21) Anmeldenummer: 96914177.9
(22) Anmeldetag: 03.05.1996
(51) Int. Cl.: A01G 9/02, A01G 9/10

(54) **PFLANZ- UND KULTURGEFÄSS**
PLANT AND CULTURE CONTAINER
RECIPIENT POUR PLANTES OU POUR CULTURES

(30) Priorität: 05.05.1995 DE 19516572
(43) Veröffentlichungstag der Anmeldung: 25.02.1998
(73) Patentinhaber: Böhringer, Eberhard, 27211 Bassum (DE)
(72) Erfinder: Böhringer, Eberhard, 27211 Bassum (DE)
(74) Vertreter: Busse & Busse Patentanwälte
(86) Internationale Anmeldenummer: EP9601847
(87) Internationale Veröffentlichungsnummer: WO9634520

(56) Entgegenhaltungen:
- AU-B- 583 294
- DE-U- 8 118 099
- FR-A- 2 692 833
- US-A- 3 985 365
- PATENT ABSTRACTS OF JAPAN vol. 18, no. 523 (C-1256), 4.Oktober 1994 & JP,A,06 181640 (MATSUSHITA ELECTRIC WORKS), 5.Juli 1994,

## Beschreibung

Die Erfindung betrifft ein Pflanz- und Kulturgefäß nach dem Oberbegriff des Anspruchs 1.

Bekannte Pflanz- und Kulturgefäße dieser Art (DE-GM 81 18 099) weisen einen jeweiligen Bodenwandteil und einen einstückig mit diesem ausgeführten Seitenwandteil auf, wobei diese Wandteile aus wirr orientierten Kokosfasern gebildet sind, die in Form eines Vlieses durch getrocknete Latex-Milch, insbesondere Naturlatex, miteinander verbunden werden. Diese Pflanztöpfe weisen jedoch eine geringe Formstabilität auf, die sich sowohl beim Leertransport als auch bei der Aufzucht von Pflanzen nachteilig auswirkt. Gemäß AU-B-583 294 ist ein mit Kokosfasern geformter Hängekorb bekannt, der durch Anwendung eines unter hohen Temperaturen aushärtenden Kunstharzes zu einem unverrottbaren und formstabilen Dekorationselement ausgesteift ist, das als Pflanz- und Kulturgefäß zur Aufzucht und Ausbringung am Pflanzort weder vorgesehen noch geeignet ist.

Der Erfindung liegt die Aufgabe zugrunde, ein Pflanz- und Kulturgefäß zu schaffen, das eine bei verbesserter Transportfähigkeit insgesamt vereinfachte Handhabung ermöglicht und dabei eine ungehinderte Anzucht von Pflanzen über einen großen Zeitraum gewährleistet.

Die Erfindung löst diese Aufgabe mit den Merkmalen des Anspruchs 1. Hinsichtlich wesentlicher weiterer Ausgestaltungen wird auf die Ansprüche 2 bis 15 verwiesen.

Das erfindungsgemäß ausgebildete Pflanz- und Kulturgefäß weist mit den bereichsweise in den Seitenwandteil und/oder den Bodenwandteil eingeformten Aussteifungsrippen eine Wandstabilisierung auf, mit der eine Erhöhung der Formstabilität des Gefäßes erreicht ist, dieses damit in einer Stapelstellung einfacher sowie mit geringerem Raumbedarf transportiert werden kann und beim bestimmungsgemäßen Einsatz der Gefäße eine verbesserte Handhabung ermöglicht ist. Die Aussteifungsrippen sind dabei aus einer Überlappung des Kokosfaser-Vliesmaterials gebildet, so daß über die nur mechanisch behandelten Kokosfasern und den geringen Latexanteil das Pflanzgefäß insgesamt als ein gut verrottbares Naturprodukt erhalten bleibt und dieses Gefäß dabei für die Anzucht der Pflanzen gleichwohl eine vorteilhafte Langzeitstabilität aufweist.

Gleichzeitig sind mit den Aussteifungsrippen und den in Umfangsrichtung des Gefäßes verbleibenden Zwischenwandteilen jeweils materialgleich ausgebildete aber unterschiedliche elastische Eigenschaften des Kokosvlieses kombinierende Bereiche gebildet, die bei der Anzucht von Pflanzen mit unterschiedlich großen Wurzelballen gezielt nutzbar sind.

Dabei bleibt einerseits im Bereich der Aussteifungsrippen durch eine Verdichtung des Kokosvlieses bzw. der Kokosfasern bei erhöhter Federsteife die elastische Dehnungsfähigkeit des Gefäßes insgesamt erhalten und andererseits bilden die Zwischenwandteile durch eine geringere Kokosfaser- und/oder Latexdichte jeweils Zonen geringerer Federsteife und hinreichender Dehnbarkeit. Damit kann ein sich während der Anzuchtzeit im Gefäß mit größer werdendem Volumen ausbreitender Wurzelballen bei ungehindertem Wachstum die Zwischenwandteile durchwurzeln und für eine danach vorgesehene Auspflanzung der Pflanze gemeinsam mit dem Gefäß verbleibt ein vorteilhaft stabiles Umhüllungsteil derart um den Wurzelballen, daß mit den formstabilen Aussteifungsrippen auch unter rauhen Transportbedingungen ein sicherer Schutz der Pflanze erreicht und nach deren Ausbringung am endgültigen Pflanzort die verbliebenen Gefäßwandteile restlos biologisch abgebaut werden können.

Weitere Einzelheiten und Vorteile der Erfindung ergeben sich aus den nachfolgenden Beschreibung und der Zeichnung, die mehrere Ausführungsbeispiele eines erfindungsgemäßen Pflanz- und Kulturgefäßes und eine Vorrichtung zu deren Herstellung veranschaulicht. Die Zeichnung zeigt:
- Fig. 1: eine perspektivische Darstellung eines Pflanz- und Kulturgefäßes mit in dessen Seitenwandteil vorgesehenen Ausstreifungsrippen,
- Fig. 2: das Pflanz- und Kulturgefäß ähnlich Fig. 1 mit einer höheren Materialdichte im Bereich des Seitenwandteils bzw. der Aussteifungsrippen,
- Fig. 3 bis Fig. 8: jeweilige Einzeldarstellungen des Pflanz- und Kulturgefäßes ähnlich Fig. 1 mit unterschiedlichen Ausbildungen der Aussteifungsrippen in den jeweiligen Seitenwandteilen,
- Fig. 9: eine Vorderansicht auf eine Formvorrichtung zur Herstellung der Pflanz- und Kulturgefäße aus einem Kokosvlies-Rohling,
- Fig. 10: eine Draufsicht der Vorrichtung gemäß Fig. 9,
- Fig. 11: eine Seitenansicht der Vorrichtung gemäß Fig. 9, und
- Fig. 12 bis Fig. 14: jeweilige Draufsichten des Pflanz- und Kulturgefäßes mit unterschiedlichen Aussteifungsrippen im Seitenwandteil bzw. Bodenteil.

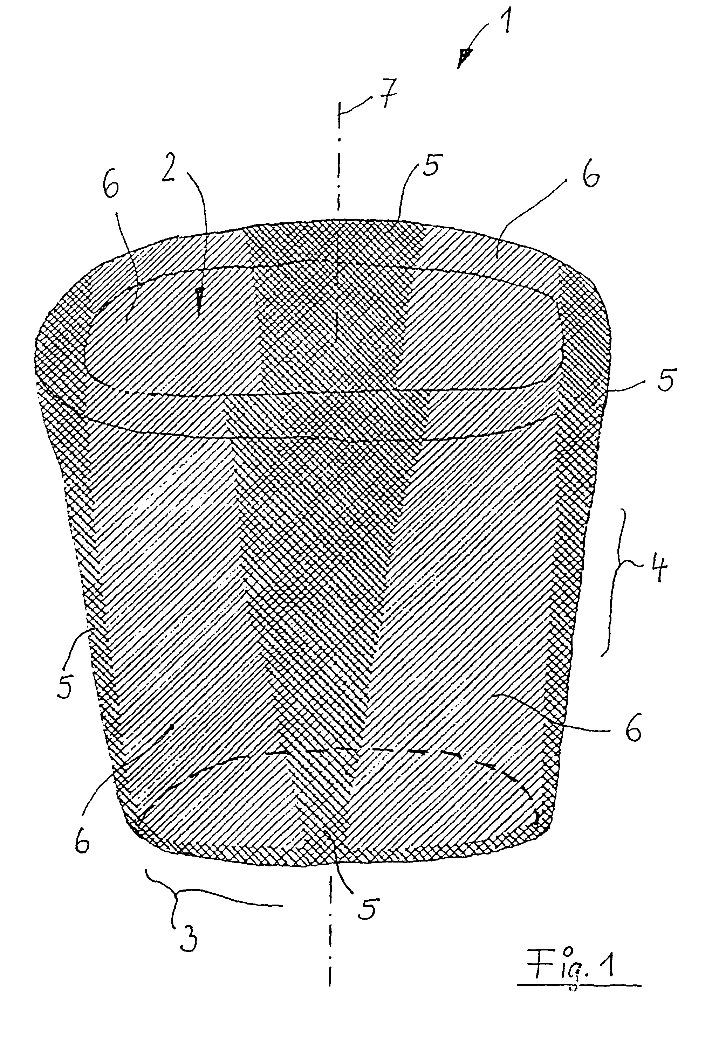

In Fig. 1 ist ein insgesamt mit 1 bezeichnetes Pflanz- und Kulturgefäß dargestellt, in dessen ein Aufnahmevolumen bildenden Aufnahmeraum 2 eine zur Anzucht und Ausbringung vorgesehene Pflanze (nicht dargestellt) einsetzbar ist.

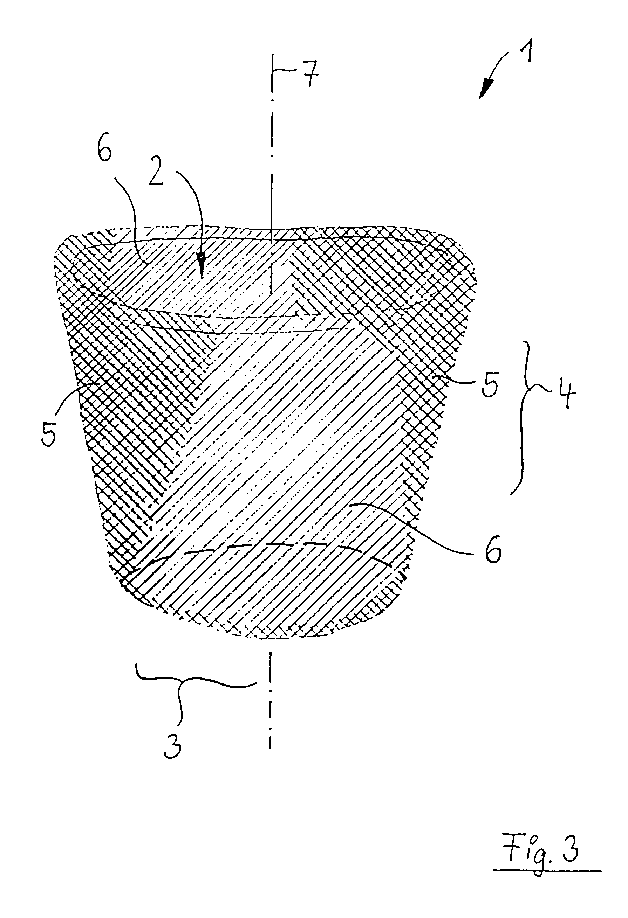

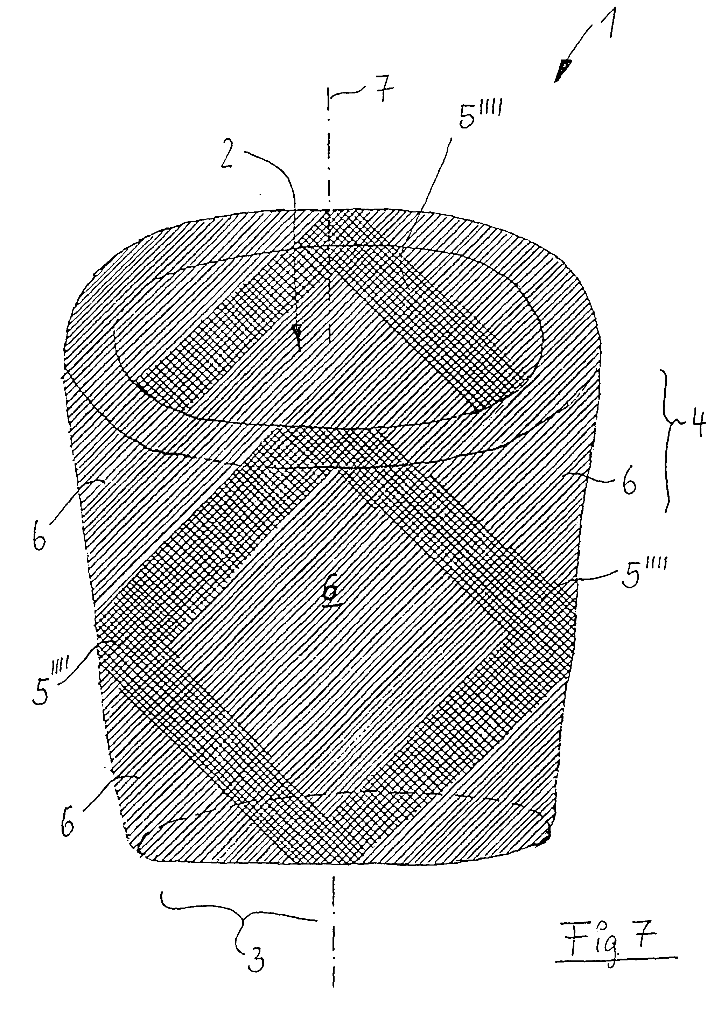

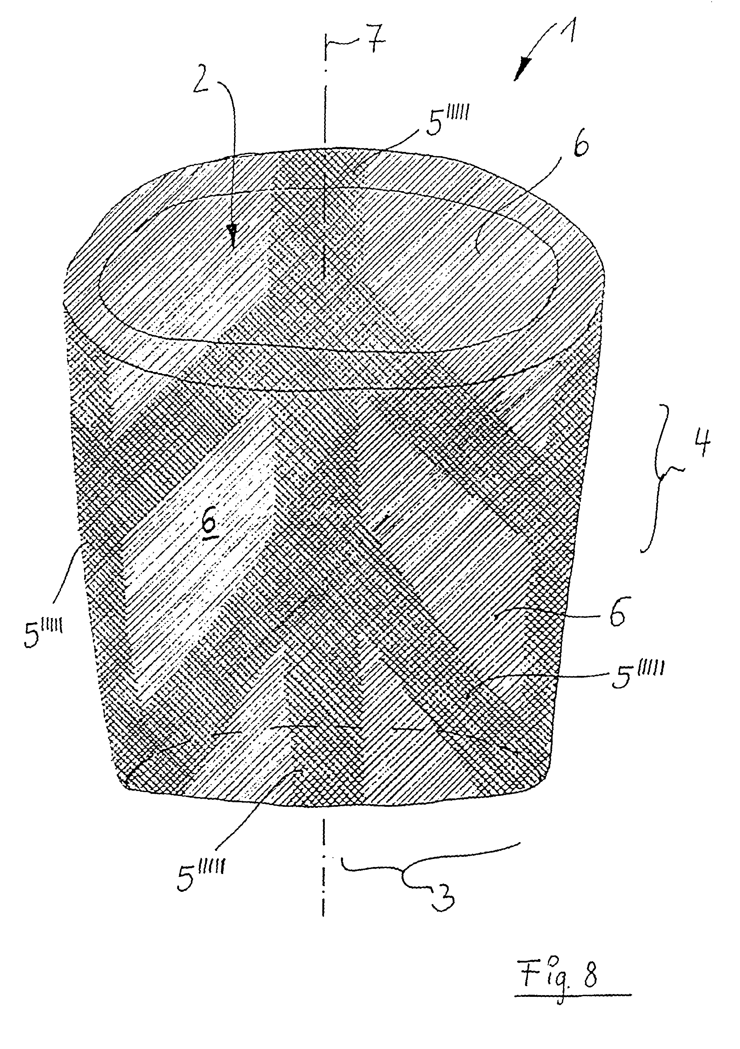

Das Pflanz- und Kulturgefäß 1 weist dabei einen im wesentlichen ebenen Bodenteil 3 und einen einstückig mit diesem ausgeführten Seitenwandteil 4 auf, wobei diese Wandteile 3, 4 aus einem über Latex verbundene Kokosfasern aufweisenden Kokosvlies bestehen, die in sämtlichen der dargestellten Ausführungsformen gemäß Fig. 1 bis 8 zu dem eine Kegelstumpfkontur aufweisenden Gefäß 1 geformt sind. Ebenso ist denkbar, das Gefäß 1 mit einer zylindrischen Grundform auszubilden oder kastenförmige Behältnisse in einer Containerform aus dem Kokosvlies herzustellen.

Bei dem erfindungsgemäßen Pflanz- und Kulturgefäß 1 ist zumindest der jeweilige Seitenwandteil 4 mit mehreren in diese integrierten Aussteifungsrippen 5 ausgebildet, mit denen der Seitenwandteil 4 gleichzeitig in Umfangsrichtung in jeweilige Zwischenwandbereiche 6 unterteilt ist. Damit weist das Pflanz- und Kulturgefäß 1 einen Seitenwandteil 4 auf, mit dem insgesamt eine an eine Vergrößerung des Aufnahmevolumens im Bereich des Aufnahmeraumes 2 anpaßbare Stütz- und Dehnungsfunktion erreicht und so ein universeller Einsatz des Pflanz- und Kulturgefäßes 1 auch zur Langzeitschulung möglich ist.

In zweckmäßiger Ausführung sind die Aussteifungsrippen 5 jeweils von einer Überlappungszone mit stoffschlüssig verbindenden Kokosfasern des Kokosvlieses gebildet. Ebenso ist denkbar den Seitenwandteil 4 des Pflanz- und Kulturgefäßes 1 durch Einlegen eines Bandes oder eines Streifens aus Kokosvlies bei der Herstellung bereichsweise zu verstärken und so mit geringem Aufwand über die Anzahl der Aussteifungsrippen 5 eine Anpassung an die jeweils vorgesehene Größe des Gefäßes 1 zu erreichen.

Die jeweiligen Aussteifungsrippen 5 weisen gegenüber den Zwischenwandbereichen 6 einen erhöhten Latexanteil auf, wobei das Latex während der Herstellung des Gefäßes 1 zugegeben werden kann und damit eine stoffschlüssige Verbindung der sich überlappenden Kokosvlieslagen erreichbar ist.

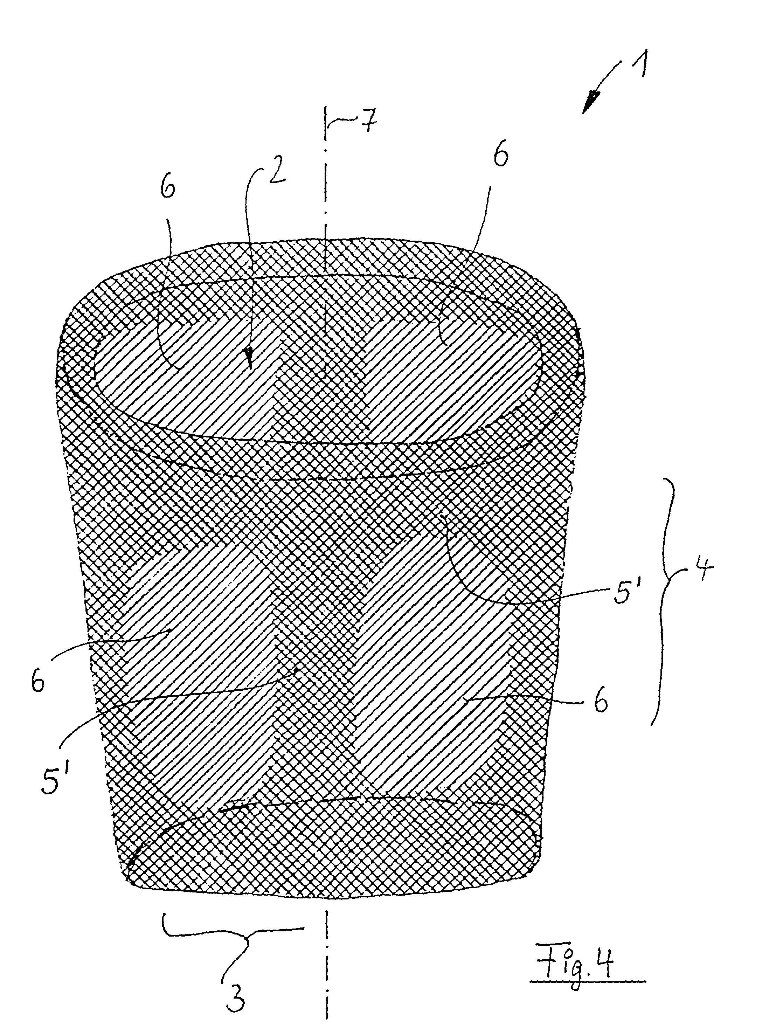

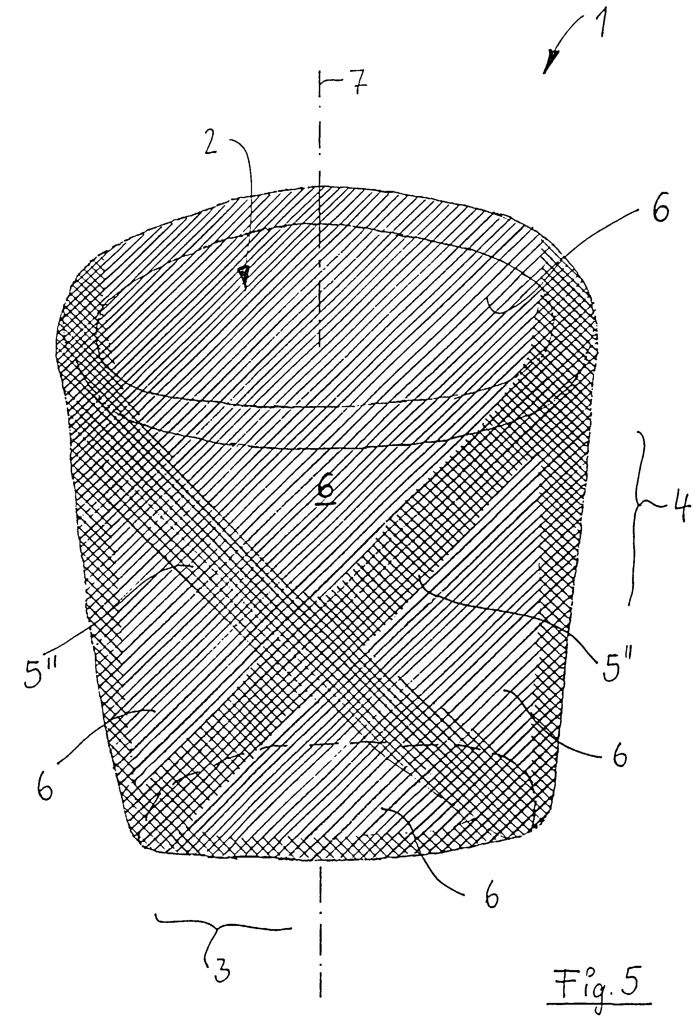

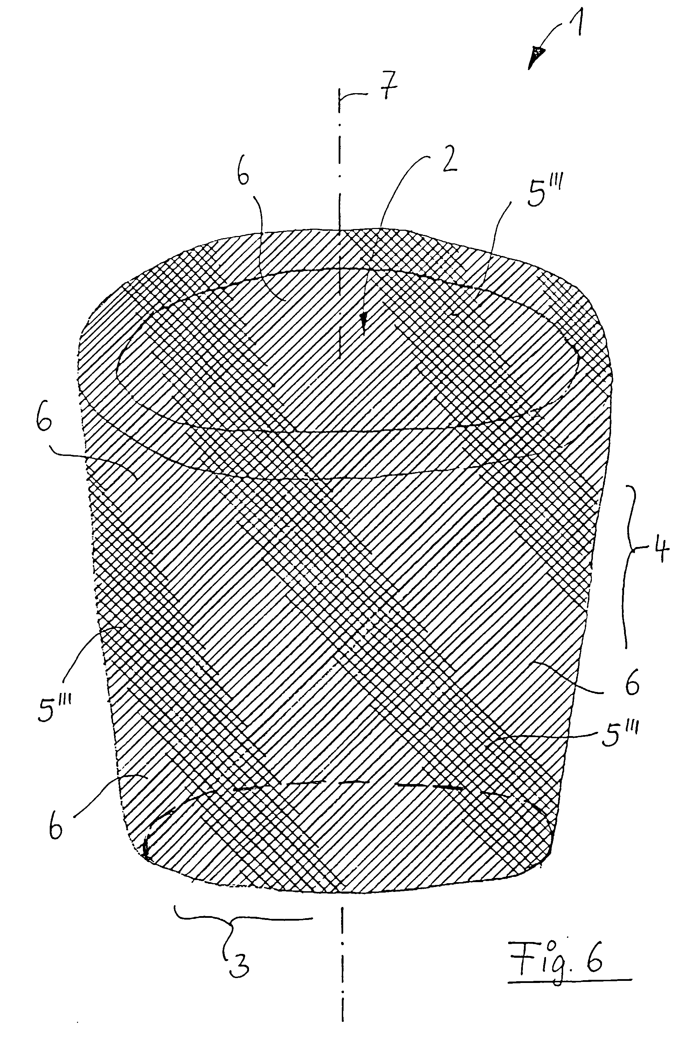

Die in Fig. 1 bis 3 dargestellten Gefäße 1 weisen jeweilige Aussteifungsrippen 5 auf, die sich im wesentlichen parallele zur Mittellängsachse 7 im Seitenwandteil 4 erstrecken. In einer Ausführungsform des Gefäßes 1 gemäß Fig. 4 und 5 sind die jeweiligen Seitenwandteile 4 bzw. der Bodenwandteil 3 mit sich kreuzenden Aussteifungsrippen 5' bzw. 5" versehen und der Darstellungen in Fig. 6 bis 8 veranschaulichen weitere Möglichkeiten, die Seitenwandteile 4 des Gefäßes 1 mit Aussteifungsrippen 5"', 5"" und 5""' so auszubilden, daß die Wandstabilität unter Beibehaltung der elastischen Eigenschaften des Kokosvlieses erhöht ist.

Das Pflanz- und Kulturgefäß 1 ist bei hoher Stabilität des gesamten Gefäß-Grundkörpers in allen dargestellten Ausführungsformen insgesamt gut durchwurzelbar, wobei insbesondere die Zwischenwandbereiche 6 über unterschiedliche Vliesdicken an die jeweiligen Anzuchtbedingungen der im Gefäß 1 befindlichen Pflanzen anpaßbar sind. In jedem Falle ermöglichen die elastischen Eigenschaften der Seitenwandteile 4 eine ungehinderte Wurzelausbildung, wobei die Wurzelrinde nicht geschnitten, gequetscht oder eingeengt wird, so daß das erfindungsgemäße Gefäß 1 im Vergleich mit Gefäßen aus Kunststoff oder hochreißfesten Leinen- oder Hanffasern vorteilhaft verbesserte Eigenschaften aufweist.

Die in dem Gefäß 1 angezogenen und verschulten Pflanzen bilden mit dem Gefäßmaterial eine biologische Einheit, wobei das elastische Kokosfasermaterial in die einzelnen Entwicklungsphasen der Pflanze integriert ist, gleichzeitig entwicklungshemmender Drehwuchs unterbunden werden kann und damit ein wesentlicher Nachteil von bekannten Ton-, Torf-, Papier-, Hanf- und Flachstöpfen vorteilhaft beseitigt ist.

Das für das Pflanz- und Kulturgefäß 1 verwendete Kokosfaservlies wird bei der Verarbeitung aus dem Rohstoff in seinen Elastizitätseigenschaften verbessert. Dabei kann die Kokosfaser im Gegensatz zu anderen Naturfasern wie z.B. Hanf, Leinen, Jute oder Sisal in seiner Reißfestigkeit dadurch verbessert werden, daß die Kokosfaser nach dem Lösen aus dem Husk-Rohstoff in einer wasserhaltigen Konsistenz zu einem Coil gewickelt und anschließend gedämpft, getwistet und getrocknet wird. Durch diese mechanischen Bearbeitungsvorgänge erhält die Kokosfaser eine sich als Drall oder Spiralform auswirkende innere Spannkraft, die auch nach einer Umformung zu der vorbeschriebenen Gefäßform erhalten bleibt und diese damit im Bereich der Wandungsteile 3, 4 bzw. der Aussteifungsrippen 5 die vorteilhaften elastischen Eigenschaften aufweist.

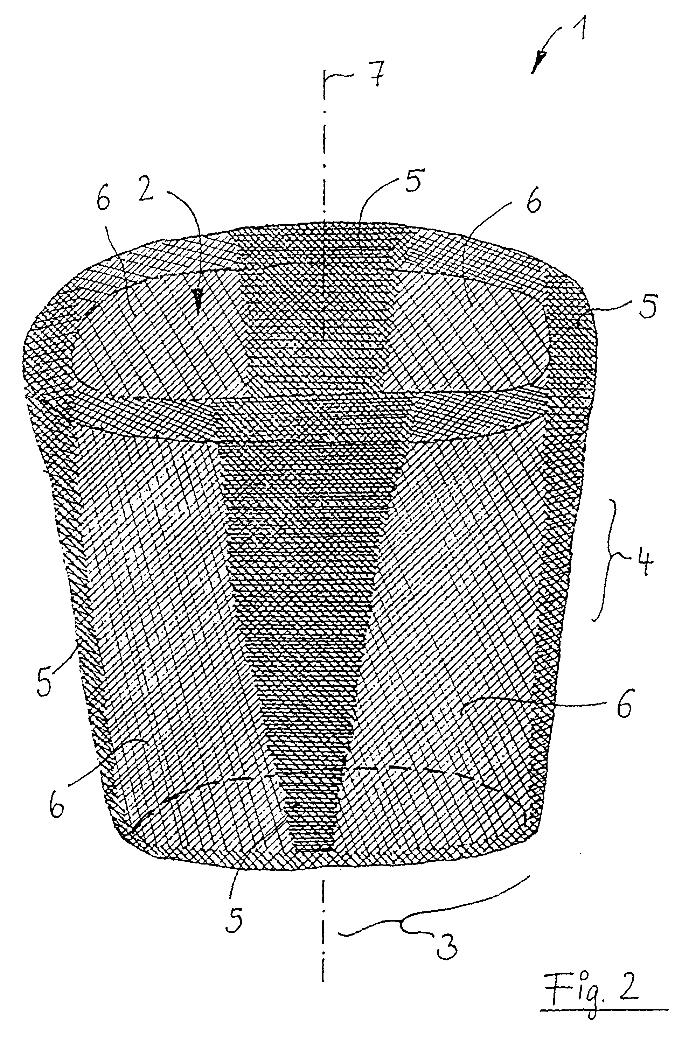

Die derart vorbereiteten Kokosfasern werden in einem ausgreifenden Verfahren zu dem Kokosfaservlies gelegt und mit dem Latex (insbesondere einer Gummibaummilchmischung) besprüht und getrocknet. In vorteilhafter Ausführung kann der eine Halbzeugmatte bildende Kokosvlies-Rohling dabei aus getwisteten und vereinzelten Kokosfasern geformt werden, so daß die Eigenschaften des Kokosvlies-Rohlings über die Anteile an Kokosfasern und Latex (beispielsweise unterschiedliche Faserdichten der Wandungsteile wie im Vergleich von Fig. 1 und Fig. 2 dargestellt) so variabel gestaltet werden können, daß kundenspezifisch unterschiedliche Gefäße 1 für ein breites Anwendungsgebiet bereitgestellt werden können.

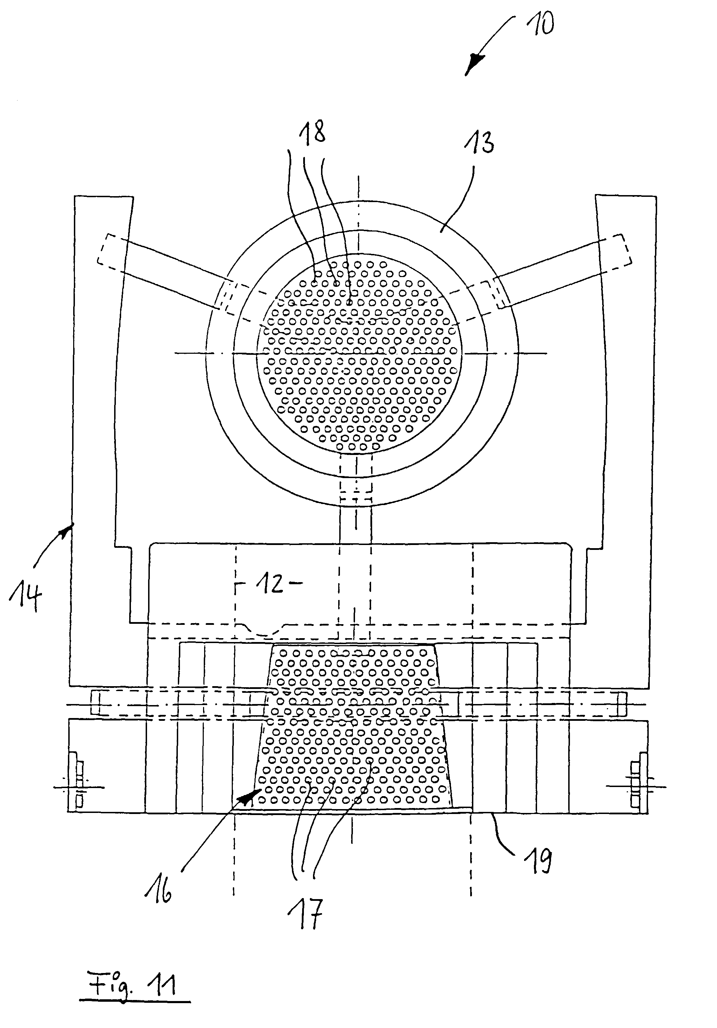

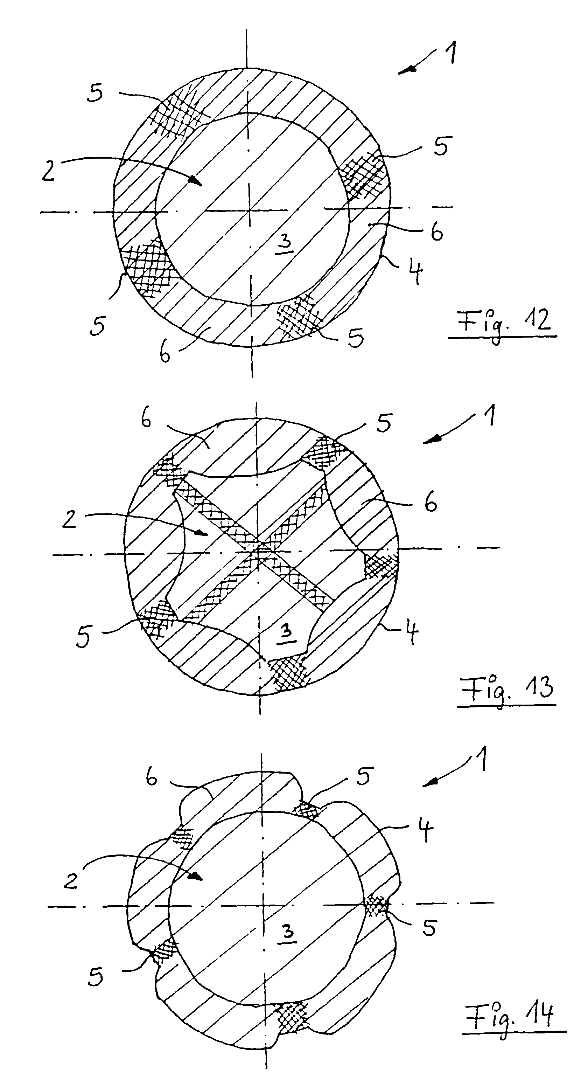

In Fig. 12 bis 14 verdeutlicht jeweils eine Draufsicht auf das Pflanz- und Kulturgefäß die Ausbildung unterschiedlicher Aussteifungsrippen 5 im Seitenwandteil 6 bzw. im Bodenteil 3 (Fig. 13).

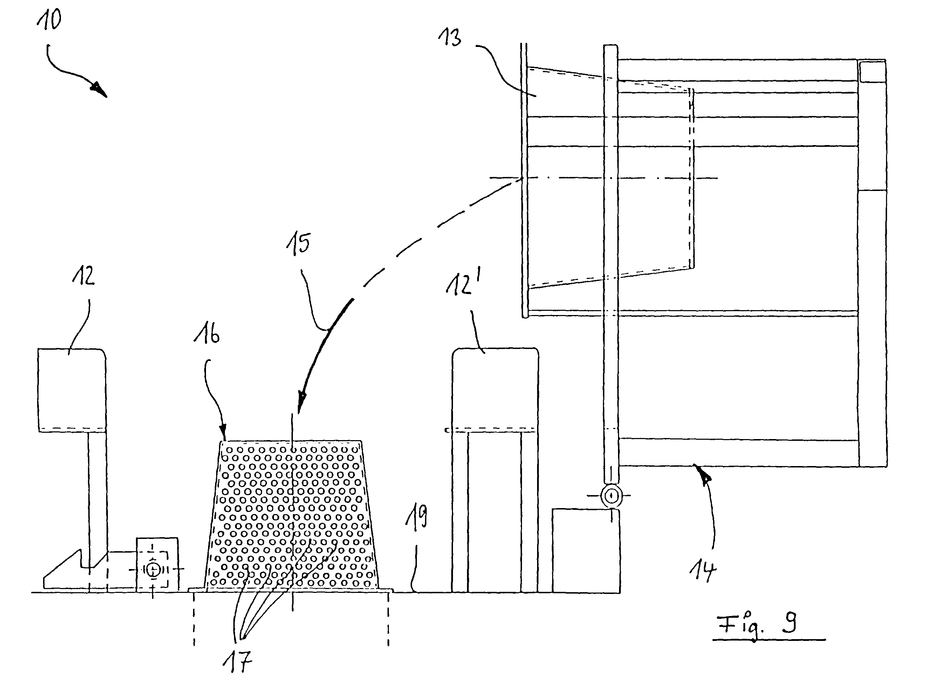

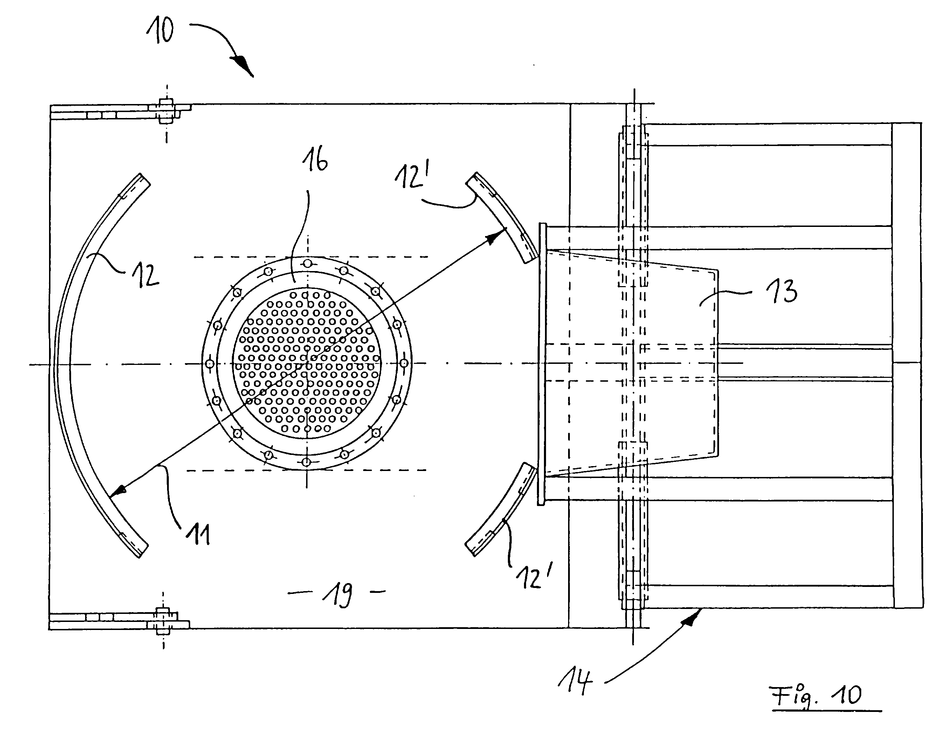

In Fig. 9 bis 11 ist eine Ausführungsform einer Formvorrichtung 10 zur Herstellung des Pflanz- und Kulturgefäßes 1 prinzipiell veranschaulicht. In einer vorbereitenden, nicht näher veranschaulichten Verarbeitungsstufe wird der als Halbzeugmatte vorliegenden Kokosvlies-Rohling entsprechend der vorgesehenen Größe des Gefäßes 1 zu einem Rohling ausgestanzt, dessen Durchmesser größer ist als ein Auflagedurchmesser 11 (Fig. 10) im Arbeitsbereich der Vorrichtung 10.

Im Bereich der jeweils nach der Formgebung die Aussteifungsrippen 5 bildenden Vlieszonen des Rohlings wird dieser entsprechend der Anzahl der vorgesehenen Aussteifungsrippen 5 jeweils mit strahlenförmig ausgerichteten Einschnitten versehen und diese Bereiche des Vliesmaterials durch eine Überlappung so überlagert, daß gleichzeitig mit der Formung des Gefäßes 1 eine mehrlagige Materialbindung entsteht. Der zur Preß-Formgebung in der Vorrichtung 10 vorbereitete Stanz-Rohling kann dabei an seiner Oberfläche zusätzlich mit Latex besprüht werden, um die Oberflächenbindung des Gefäßes 1 insgesamt zu verbessern.

Zur Formgebung wird der ausgestanzte und die vorbeschriebenen Einschnitte aufweisende Kokosvlies-Rohling auf einem Anschlagblech 12, 12' der Vorrichtung 10 positioniert, danach ein Preßzylinder 13 mittels einer Schwenkhalterung 14 in Arbeitsrichtung (Pfeil 15) geschwenkt und der Kokosvlies-Rohling über eine Kernform 16 gedrückt. Dem dabei erfolgenden Preßvorgang des Rohlings wird gleichzeitig eine Heißpreßtrocknung dadurch überlagert, daß über jeweilige Verteildüsen 17 Heißluft in die Preßzone zwischen dem Preßzylinder 13 und der Kernform 16 eingeleitet und über Ableitöffnungen 18 im Preßzylinder 13 die Heißluft abgeleitet wird. Mit diesem gleichzeitig eine Preßung und eine Trocknung bewirkenden Arbeitsgang ist die Formung der Kokosvlies-Rohlings zu der Grundform des Gefäßes 1 in geringem Aufwand erreicht. In zweckmäßiger Ausführung können bei der Serienfertigung mehrere der Vorrichtungen 10 nebeneinander angeordnet sein, so daß die Anzahl der gleichzeitig geformten Gefäße 1 erhöht ist.

Diese nunmehr als Zwischenprodukt vorliegenden Gefäße 1 verbleiben auf der jeweiligen lösbar mit der Vorrichtung 10 im Bereich einer Halteplatte 19 verbundenen Kernform 16 und werden gemeinsam mit dieser in einen Trockenofen (nicht dargestellt) verbracht, so daß hier eine Formstabilisierung des Kokosvlies-Rohlings über dessen LatexAnteil erfolgt und danach das hinreichend stabile Gefäß 1 aus dem Trockenofen entnommen und für den Transport raumsparend gestapelt werden kann.

Die Dauer dieses Trocknungsvorganges kann auf die unterschiedlichen Kokosfaser-Latex-Anteile des Formlings abgestimmt sein, wobei die Trocknungstemperatur in einem Bereich von 80 bis 140°C, vorzugsweise 120°C liegt. Nach dem Trocknungsvorgang wird das geformte Pflanz- und Kulturgefäß 1 von der Herstellungs-Kernform 16 abgenommen und kann danach in einem Autoklaven (nicht dargestellt) einer Vulkanisation unterzogen werden, wobei bei einem Druck von 1,5 bar und einer Temperatur von ca. 120°C nach 20 Minuten der Latex-Bindungsanteil in den elastisch verformbaren Zustand übergehen und damit der endgültige formstabile und elastische Zustand der Gefäßes 1 erreicht ist.

Für die in Fig. 1 bis 8 dargestellten Gefäße 1 können unterschiedliche Kokosfaseranteile bzw. Vliesgewichte vorgesehen sein, wobei die Materialbindung zusätzlich über unterschiedlichen Latexgehalt variabel ist. Für Kultur- und Pflanzgefäße 1 mit unterschiedlichen Aufnahmeräumen (Aufnahmevolumen) in üblichen Abmessungen ergeben sich beispielsweise folgende Materialzusammensetzungen:

| | |
|---|---|
| bis 4 l | = 600 g/m² mit einem Latexanteil von mind. 50 %; Wandstärke bis 10 mm |
| ab 4,5 l bis 10 l | = 800 g/m² mit einem Latexanteil von ca. 50 %; Wandstärke 12 - 15 mm |
| 10,5 l bis 25 l | = 1200 g/m² mit einem Latexanteil von ca. 60 % und einer Wandstärke von 15 - 16 mm |
| 25,5 l bis 50 l | = 1400 g/m² mit einem Latexanteil von ca. 60 %; Wandstärke von 18 - 20 mm |
| über 50-l-Topf | = mehr als eine Lage Vlies und je Lage 1000 g/m² und einem Latexanteil von ca. 50 %; Wandstärke der einzelnen Lagen 12 mm |

Mit den vorbeschriebenen Pflanz- und Kulturgefäßen 1 ist bei verbesserter Formstabilität gleichzeitig die Wasser-, Nährstoff-, und Luftdurchlässigkeit des Gefäßes derart gewährleistet, daß durch produktspezifische Durchlüftungsmöglichkeiten das Pflanzenwachstum über einen verbesserten Gasaustausch beschleunigt ist, der Wasserhaushalt des Wurzelballens optimal gestaltet werden kann, damit auch bei überhöhtem Gießwasserangebot Fäulniserscheinungen sicher vermieden sind und durch die Gestaltung der Seitenwandteile bzw. des Bodenwandteiles des Pflanz- und Kulturgefäßes 1 für die Luft- und Wasserführung ein ideales Porenvolumen erreichbar ist.

Mit dem stabilitätsverbesserten Pflanz- und Kulturgefäß 1 ist ein vollwertiger Ersatz der zur Zeit am Markt befindlichen Pflanztöpfe aus Kunststoff möglich und hinsichtlich seiner Verwendungsmöglichkeiten ist mit dem Gefäß 1 eine Bedarfslücke schließbar, die im modernen Baumschulenmanagement sowie in der zeitgemäßen Vermarktung von Baum- und Strauchpflanzen unter umweltfreundlichen und verpackungssparenden Bedingungen bisher nicht geschlossen werden konnte.

Mit dem vorbeschriebenen Pflanz- und Kulturgefäß 1 können die Verpackungs- und Transportaufgaben der Baumschulen- und Gartengewächse vom Ort der Erzeugung und Verschulung bis zum endgültigen Standort gelöst werden, wobei keine zusätzlichen Materialien zur Ballenstabilisierung anzubringen sind und keine umweltbelastenden Restmaterialien anfallen. Dies ist insbesondere dann von Bedeutung, wenn in Pflanzenanzucht-, Pflanzenvermehrungs- und Baumschulbetrieben Kunststofftöpfe verwendet werden. Diese Kunststofftöpfe können die Anforderungen unter abfallwirtschaftlichen und ökologischen Gesichtspunkten nicht erfüllen, da die Entsorgung kompliziert ist. Außerdem ist das Austopfen derartiger in stabilen Töpfen verschulter Pflanzen schwierig, da die Wurzeln durch die Ent- und Bewässerungslöcher der Kunststofftöpfe hindurchwachsen, so daß zusätzliche Handarbeit erforderlich ist, der Wurzelballen dadurch in Mitleidenschaft gezogen wird und die Einheit von Wurzeln und Kultursubstrat zerstört ist.

Dem gegenüber ist die Haltbarkeit und Wurzelaufnahmefähigkeit der Pflanz- und Kulturgefäße 1 gemäß der Erfindung während der gesamten Kulturzeit gewährleistet. Hinzu kommt, daß das Material des aus naturbelassener Kokosfaser gebildeten Gefäßes 1 auch unter wirtschaftlichen Aspekten kostenoptimal gestaltet werden kann, da die Herstellungskosten gering sind und die Entsorgung entfällt.

Ein weiterer vorteilhafter Einsatzbereich des Gefäßes 1 eröffnet sich mit der Möglichkeit einer Sommerpflanzung vom mehrjährigen großen Pflanzen, die mit Wurzelballen geliefert werden und mit dem Gefäß 1 eine optimale Wurzelverpackung erhalten. Insbesondere für Großbäume und Großsolitärs eröffnen die elastischen Eigenschaften der Pflanz- und Kulturgefäße 1 eine hinreichende Durchwurzelungsmöglichkeit bei hoher Stabilität und Zerreißfestigkeit, die in der weiteren Wachstumsphase der Pflanze von einer vollständigen Verrottung des zur Anwendung kommenden Kokosfasermaterials abgelöst wird und damit Bodenverunreinigungen vollständig vermieden sind.

## Patentansprüche

1. Pflanz- und Kulturgefäß zur Aufnahme von Pflanzen, das einen Bodenwandteil (3) und einen einstückig mit diesem ausgeführten Seitenwandteil (4) umfaßt, wobei diese Wandteile aus einem über Latex verbundene Kokosfasern aufweisenden Kokosvlies bestehen und das vollständig biologisch abbaubare Pflanzgefäß zur Anzucht und Ausbringung von Pflanzen am Pflanzort verwendbar ist, dadurch gekennzeichnet, daß zumindest der Seitenwandteil (4) des Pflanz- und Kulturgefäßes (1) mit einer oder mehreren in diese integrierten und durch Materialverdichtung(en) gebildeten Aussteifungsrippen (5; 5'; 5"; 5"'; 5""; 5""') versehen ist, wobei die Aussteifungsrippen (5; ...) Zwischenwandbereiche (6) begrenzen, die eine geringere Kokosfaser- und/oder Latexdichte als der Bereich der Aussteifungsrippen (5; 5'; 5''; 5"'; 5""; 5""') aufweisen und damit Zonen geringerer Federsteife und hinreichender Dehnbarkeit bilden.

2. Pflanz und Kulturgefäß nach Anspruch 1, dadurch gekennzeichnet, daß die Aussteifungsrippen (5) jeweils von einer Überlappungszone mit stoffschlüssig verbundenen Kokosfasern des Kokosvlieses gebildet sind.

3. Pflanz- und Kulturgefäß nach Anspruch 1 oder 2, dadurch gekennzeichnet, daß die Aussteifungsrippen (5) einen gegenüber den Zwischenwandbereichen (6) erhöhten Latexanteil aufweisen.

4. Pflanz- und Kulturgefäß nach einem der Ansprüche 1 bis 3, dadurch gekennzeichnet, daß die Aussteifungsrippen von im wesentlichen horizontalen Überlappungszonen im Seitenwandteil (4) gebildet sind.

5. Pflanz- und Kulturgefäß nach einem der Ansprüche 1 bis 4, dadurch gekennzeichnet, daß die Aussteifungsrippen (5) von mehrlagigen Überlappungszonen des Kokosvlieses gebildet sind.

6. Pflanz- und Kulturgefäß nach einem der Ansprüche 1 bis 5, dadurch gekennzeichnet, daß der Seitenwandteil (4) und/oder der Bodenwandteil (3) mit sich kreuzenden Aussteifungsrippen (5; 5"; 5""') versehen sind.

7. Verfahren zur Herstellung eines Pflanz- und Kulturgefäßes nach Anspruch 1, dadurch gekennzeichnet, daß das Pflanz- und Kulturgefäß (1) ausgehend von einem als eine Halbzeugmatte mit geöffneten Einzelfasern und den Latex-Bindungsbereichen ausgebildeten Kokosvlies-Rohling über eine Heißpreßtrocknung geformt wird.

8. Verfahren nach Anspruch 7, dadurch gekennzeichnet, daß aus einer Halbzeugmatte mit im wesentlichen gleicher Vliesdicke mehrere der Kokosvlies-Rohlinge gebildet werden.

9. Verfahren nach Anspruch 7 oder 8, dadurch gekennzeichnet, daß der Kokosvlies-Rohling mit zumindest einem sich über die Länge des Seitenwandteils (4) erstreckenden Trennschnitt versehen wird, in dessen Bereich jeweils die die Aussteifungsrippe (5) bildende Überlappungszone vorgesehen wird.

10. Verfahren nach Anspruch 7 oder 8, dadurch gekennzeichnet, daß der Kokosvlies-Rohling mit zumindest einer sich über die Höhe des Seitenwandteils (4) erstreckenden und eine mehrlagige Überlappungszone der Aussteifungsrippe bildenden Faltung vorsehen wird.

11. Verfahren nach Anspruch 7 oder 8, dadurch gekennzeichnet, daß die Aussteifungsrippen durch in Umfangsrichtung des Gefäßes im Seitenwandteil verlaufende Faltungen gebildet werden.

12. Verfahren nach einem der Ansprüche 7 bis 11, dadurch gekennzeichnet, daß der zum Pflanz- und Kulturgefäß (1) geformte Kokosvlies-Rohling im Bereich der Aussteifungsrippen (5; 5'; 5"; 5"'; 5""; 5""') mit unterschiedlichen Latexanteilen versehen wird und jeweils Dehnungszonen mit unterschiedlichen elastischen Eigenschaften gebildet werden.

13. Verfahren nach einem der Ansprüche 7 bis 12, dadurch gekennzeichnet, daß der Kokos-Vlies-Rohling aus zu einem Coil gewickelten, gedämpften, getwisteten und getrockneten Kokosfasern hergestellt wird.

## Claims

1. A plant and culture container for holding plants and comprising a bottom wall part (3) and, integral therewith, a side wall part (4), these wall parts consisting of a coconut fleece comprising latex-bonded coconut fibres and which can be used as a completely biologically degradable planting container for the cultivation and production of plants at the planting site, characterised in that at least the side wall part (4) of the planting and culture container (1) is provided with one or a plurality of reinforcing ribs (5, 5', 5", 5"', 5"", 5""') integrated into it and formed by material thickening(s), whereby the reinforcing ribs (5; ...) define intermediate wall zones (6) which have a lesser coconut fibre and/or latex density than the region of the reinforcing ribs (5, 5', 5", 5"', 5"", 5""') and thus form zones of reduced spring stiffness and adequate extensibility.

2. A plant and culture container according to claim 1, characterised in that the reinforcing ribs (5) are each formed by an overlapping zone with materially connected coconut fibres of the coconut fleece.

3. A plant and culture container according to claim 1 or 2, characterised in that the reinforcing ribs (5) have a proportion of latex which is enhanced in comparison with the intermediate wall zones (6).

4. A plant and culture container according to one of claims 1 to 3, characterised in that the reinforcing ribs are formed by substantially horizontal overlapping zones in the side wall part (4).

5. A plant and culture container according to one of claims 1 to 4, characterised in that the reinforcing ribs (5) are formed by multi-layer overlapping zones of the coconut fleece.

6. A plant and culture container according to one of claims 1 to 5, characterised in that the side wall part (4) and/or the bottom wall part (3) are provided with intersecting reinforcing ribs (5; 5", 5""').

7. A method of producing a plant and culture container according to claim 1, characterised in that, starting from a coconut fleece blank constructed as a semi-finished mat with open individual fibres and the latex bonding zones, the plant and culture container (1) is formed by hot-press drying.

8. A method according to claim 7, characterised in that a plurality of the coconut fleece blanks are formed from a semi-finished mat having substantially the same fleece thickness.

9. A method according to claim 7 or 8, characterised in that the coconut fleece blank is provided with at least one parting cut extending over the length of the side wall part (4) and in the region of which the overlapping zone constituting the reinforcing rib (5) is provided.

10. A method according to claim 7 or 8, characterised in that the coconut fleece blank is provided with at least one fold extending over the height of the side wall part (4) and constituting a multi-layer zone of overlap of the reinforcing rib.

11. A method according to claim 7 or 8, characterised in that the reinforcing ribs are formed by folds extending in the side wall part in the peripheral direction of the container.

12. A method according to one of claims 7 to 11, characterised in that the coconut fleece blank formed into the plant and culture container (1) is, in the region of the reinforcing ribs (5, 5', 5", 5"', 5"", 5""'), provided with various proportions of latex and in that in each case stretching zones of differing elastic properties are formed.

13. A method according to one of claims 7 to 12, characterised in that the coconut fleece blank is produced from damped, twisted and dried coconut fibres wound into a coil.

## Revendications

1. Récipient pour plantes et cultures pour recevoir des plantes, qui comprend une partie formant paroi de fond (3) et une partie formant paroi latérale (4) réalisée d'une seule pièce avec celle-ci, ces parties formant paroi étant constituées d'un voile de coco présentant des fibres de coco liées par un latex et le récipient pour plantes complètement biodégradable pouvant être utilisé pour la culture et la transplantation de plantes sur le lieu de plantation, caractérisé en ce qu'au moins la partie formant paroi latérale (4) du récipient (1) pour plantes et cultures est pourvue d'un ou plusieurs raidisseurs (5; 5'; 5"; 5"'; 5""; 5""') intégrés à celle-ci et formée par une ou des densifications du matériau, les raidisseurs (5; ...) délimitant des zones de paroi intermédiaires (6) qui présentent une densité de fibres de coco et/ou de latex plus faible que la zone des raidisseurs (5; 5'; 5"; 5"'; 5""; 5""') et forment donc des zones de moindre rigidité et d'extensibilité suffisante.

2. Récipient pour plantes et cultures selon la revendication 1, caractérisé en ce que les raidisseurs (5) sont formés respectivement par une zone de recouvrement avec des fibres de coco du voile de coco liées avec fermeture par matière.

3. Récipient pour cultures et plantes selon la revendication 1 ou 2, caractérisé en ce que les raidisseurs (5) présentent une teneur en latex plus élevée par rapport aux zones de paroi intermédiaires (6).

4. Récipient pour plantes et cultures selon l'une quelconque des revendications 1 à 3, caractérisé en ce que les raidisseurs sont formés de zones de recouvrement sensiblement horizontales dans la partie formant paroi latérale (4).

5. Récipient pour plantes et cultures selon l'une quelconque des revendications 1 à 4, caractérisé en ce que les raidisseurs (5) sont formés de zones de recouvrement à plusieurs couches du voile de coco.

6. Récipient pour plantes et cultures selon l'une quelconque des revendications 1 à 5, caractérisée en ce que la partie formant paroi latérale (4) et/ou la partie formant paroi de fond (3) sont pourvues de raidisseurs (5; 5''; 5''''') qui se croisent.

7. Procédé de fabrication d'un récipient pour plantes et cultures selon la revendication 1, caractérisé en ce que le récipient (1) pour plantes et cultures est formé à partir d'une ébauche de voile de coco formée sous l'aspect d'un mat semi-ouvré avec des fibres individuelles ouvertes et des zones de liaison par latex via un procédé de séchage par compression à chaud.

8. Procédé selon la revendication 7, caractérisé en ce que plusieurs des ébauches de voile de coco sont formées d'un mat semi-ouvré avec une épaisseur du voile sensiblement égale.

9. Procédé selon la revendication 7 ou 8, caractérisé en ce que l'ébauche de voile de coco est pourvue d'au moins une coupe cisaillée s'étendant sur la longueur de la partie formant paroi latérale (4), dans la zone de laquelle est prévue, respectivement, la zone de recouvrement formant le raidisseur (5).

10. Procédé selon la revendication 7 ou 8, caractérisé en ce que l'ébauche de voile de coco est pourvue d'au moins un pli s'étendant sur la hauteur de la partie formant paroi latérale (4) et constituant une zone de recouvrement à plusieurs couches du raidisseur.

11. Procédé selon la revendication 7 ou 8, caractérisé en ce que les raidisseurs sont constitués par des plis s'étendant dans la direction périphérique du récipient dans la partie formant paroi latérale.

12. Procédé selon l'une quelconque des revendications 7 à 11, caractérisé en ce que l'ébauche de voile de coco formée en récipient (1) pour plantes et cultures est pourvue, dans la zone des raidisseurs (5; 5'; 5"; 5"'; 5""; 5""'), de teneurs en latex différents et, à chaque fois, des zones extensibles ayant différentes propriétés élastiques sont ainsi formées.

13. Procédé selon l'une quelconque des revendications 7 à 12, caractérisé en ce que l'ébauche de voile de coco est fabriquée à partir de fibres de coco enroulées en bobine, traitées à la vapeur, retordues et séchées.
